# EUROPEAN PATENT SPECIFICATION

(11) **EP 1 992 002 B1**
(45) Date of publication and mention of the grant of the patent: **23.05.2012**
(21) Application number: 07713466.6
(22) Date of filing: 23.02.2007
(51) Int. Cl.: H01H 71/02, H02B 1/06

(54) **ELECTRICAL EQUIPMENT WITH RECONFIGURABLE FRONTAL PORTION**
ELEKTRISCHE AUSRÜSTUNG MIT REKONFIGURIERBAREM VORDERTEIL
EQUIPEMENT ELECTRIQUE DONT LA PARTIE FRONTALE EST RECONFIGURABLE

(30) Priority: 09.03.2006 IT RM20060123
(43) Date of publication of application: 19.11.2008
(73) Proprietor: Bticino S.p.A., 20154 Milano (IT)
(72) Inventor: FABRIZI, Fabrizio, 24100 Bergamo (IT)
(74) Representative: Carangelo, Pierluigi
(86) International application number: PCT/IT2007/000127
(87) International publication number: WO 2007/102180

(56) References cited:
- EP-A1- 1 139 532
- DE-B- 1 092 094
- DE-B- 1 126 471
- US-B1- 6 480 082

## Description

The present invention relates to the technical field of electrical equipment, such as switches and the like, and particularly relates to an electrical equipment as defined in the preamble of claim 1.

A lot of electrical equipment, both for use in civil systems and for use in industrial systems, is known to be intended for installation in suitable containment and support structures, which are called switchboards or cabinets.

It is known that a typical electrical switchboard consists of a box-like framework defining an inner chamber for housing electrical equipment. Generally, this box-like framework comprises walls, or wall portions, that are formed by panels, such as made of sheet metal.

In order to allow an operator to establish a visual and/or tactile interaction with the electrical equipment contained within an electrical switchboard, it is known to provide windows in the panels of these switchboards, which are suitable to receive generally frontal and projecting portions of many pieces of electrical equipment placed side by side. These frontal and projecting portions normally carry operating means (for example, levers, push-buttons), and/or signalling devices.

If a dimension of these windows (i.e. the width) is such as to affect the number of pieces of electrical equipment that can be modularly installed within an electrical switchboard placed side by side, the other dimension is usually set such as to fit the height of the above-mentioned projecting frontal portions of the electrical equipment. This serves both to create an even and linear appearance, from the visual point of view, and prevent any gaps defined between a peripheral portion of the projecting portion of the electrical equipment and an edge of this window from becoming a place where dust easily builds up.

Since in the electrical equipment available on the market, the height of the projecting frontal part can have different standard values (for example, varying from market to market), sometimes a problem arises in that mounting an equipment to a switchboard at a panel having a window with a lower standard height than the standard height of the projecting part of this electrical equipment is not possible.

To solve this problem, manufacturers are forced to put and keep in production several electrical equipment lines, each line including electrical equipment having a frontal portion with a specific standard height. This solution undoubtedly entails considerable costs for manufacturers.

Electrical equipment as defined in the preamble of claim 1 is previously known from DE 1126471 B.

An object of the present invention is to provide such an electrical equipment as to resolve the drawbacks mentioned above with reference to the prior art.

This object is achieved by means of an electric equipment as defined in the annexed claim 1 in the broadest embodiment thereof and in the dependent claims in several particular embodiments.

The invention will be better understood from the following detailed description of an embodiment thereof, which is given by way-of example and thus not to be considered limitative in any way, with reference to the annexed drawings, in which:
- Fig. 1 shows a view of an electrical equipment in accordance with the present invention, in a first operating configuration;
- Fig. 2 shows a view of the electrical equipment in Fig. 1 in a second operating configuration.

In the figures, equal or similar elements will be designated with the same numerals.

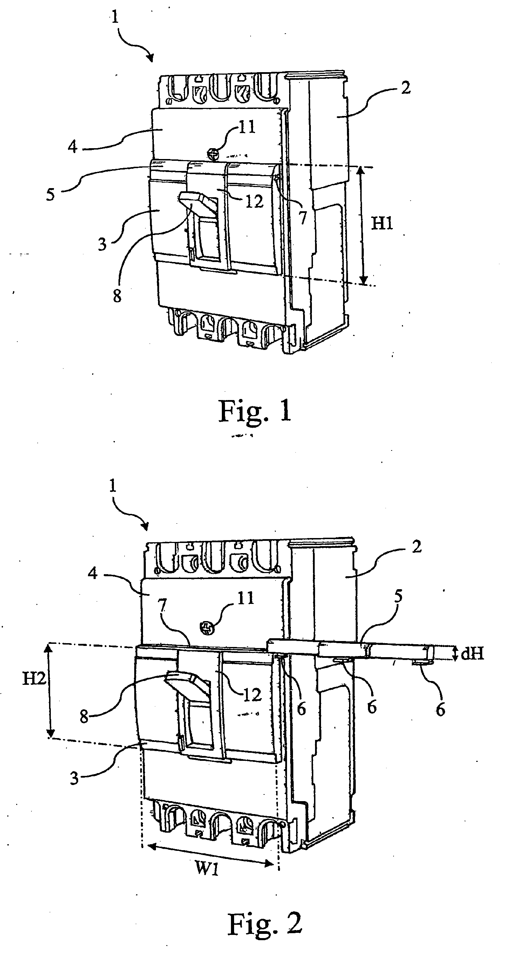

In Fig. 1 is shown a perspective angular view of a particularly preferred embodiment of an electrical equipment 1 in accordance with the present invention. Particularly, in the example in Fig. 1, the electrical equipment 1 is a modular equipment that is embodied, in a non-limiting manner, by a switch 1 being commonly called the molded-case switch. A molded-case switch, contrarily to a so-called "open" switch, includes a box-like body made of insulating material, globally designated with 2, which also has a bearing function for the inner mechanisms of switch 1. A molded-case switch is generally used in the fields of industrial automation and quaternary services, in order to cutoff currents, even very high, such as having a value to 1500 A.

The switch 1 can be installed, for example on suitable guides or rails, within a switchboard, or electrical cabinet (not shown in the figures). The box-like body 2 of the switch 1 includes a front face 4, a frontal portion 3 of the box-like body 2 projecting therefrom, which is intended to be received within a substantially quadrangular window, or opening, being provided in a panel of the electrical switchboard (window, panel and switchboard are not shown in the figures), such as to allow an operator to establish a tactile and/or visual interaction with the switch 1 when the latter is installed in the electrical switchboard. Practically, the projecting frontal portion 3 of the box-like body 2 is such as to pass through the electrical switchboard panel window to be flush with the latter, or to slightly project therefrom outwardly of the electrical switchboard. Thereby, for example, a control lever 8 for the electrical equipment 1 can be externally operated, and/or a visual interaction can be established by means of a flange 12 of the electrical equipment 1.

In the particular example illustrated herein, in a non-limiting manner, the front face 4 of the switch 1 from the which the projecting frontal, part 3 protrudes, is a cover of the box-like body 2 which in the example is fixed to the box-like body 2 by means of a screw 11.

The projecting frontal portion 3 has a dimension, practically the height H1, which is designed in order to fit (i.e. to be substantially similar to) the height of the quadrangular window of the panel in which said projecting portion 3 is intended to be received. On the other hand, in a known manner, the width of this panel window is such as to determine the maximum number of modular electric equipment that can be mounted beside the switch 1.

As may be deduced from the combined observation of Fig. 1 and 2, advantageously, the switch 1 includes a fitting element 5 that can be removably coupled to the box-like body 2 (and particularly face 4) in order to change (i.e. reconfigure) the projecting frontal portion 3, such as to change the height of this projecting part 3. It should be observed, in fact, that in the operating configuration in which the fitting element 5 is coupled to the box-like body (Fig. 1), the height of the projecting part is H1, while in the operating configuration in which the fitting element 5 is removed from the box-like body 2 (Fig. 2), the height of the projecting frontal part 3 is H2, H2 being lower than H1. Thereby, the height of the projecting part 3 can be selectively adapted to panel windows having varying heights, such as windows having varying standard dimensions. For example, the height dH of the fitting element 5 can be selected such that this height dH corresponds to the difference between two standard heights provided for a panel window, for example such that H1 = 50mm, H2 = 45 mm (in this example, dH = 5mm).

In a particularly preferred embodiment, the fitting element 5 is substantially rod-shaped, such as made of plastics, having a length equal to the width W1 of the projecting frontal portion 3, and which is arranged, when applied to the box-like body 2, at an end portion of the projecting frontal part 3, in the example being at an upper end portion of the projecting frontal part 3.

In a particularly advantageous embodiment, the fitting element 5 includes quick-coupling means 6 to be removably fixed to the front face 4 of the box-like body 2, preferably without using tools. In the particularly preferred embodiment, as shown in the figures, these coupling means include one ore more teeth 6 that are shaped such as to be capable of engagement within a coupling channel 7 provided within the box-like body 2, more precisely provided on the front face of the latter. In this case, the coupling of the fitting element 5 to the box-like body 2, and its removal from the latter can be obtained simply by means of relative sliding between both pieces in the main direction of extension of the coupling channel 7. For example, the teeth 6 can be shaped such as to have a substantially T-shaped profile, or a substantially L-shaped profile.

The coupling channel 7 can be an individual channel, or alternatively a channel formed by as many channel segments as the teeth 6 being provided within the fitting element 5.

In a particularly advantageous embodiment, such as shown in Fig. 2, the coupling channel 7 is provided in the thickness of the projecting frontal part 3, such that this channel 7 is practically invisible when the fitting element 5 is not applied to the box-like body 2.

It should be considered, however, that other equivalent means known to those skilled in the art may as well be used alternatively to the specific preferred coupling means described above. For example, an embodiment can be provided in which the fitting element 5 includes, particularly on the side thereof that is intended to come in contact with the front face 4 of the box-like body 2, a layer of pressure-sensitive adhesive material, such as to be able of allowing a removable and repeatable coupling between the fitting element 5 and the box-like body 2.

It should be further considered that, while in the present detailed description reference has been made only to an electrical equipment in the form of a box-like switch, the present invention can be applied to different electrical equipment. Just to mention some examples, the present invention can be also applied to electrical equipment in the form of signalling devices provided for being mounted to panels or in the form of modular devices for the motorization of switches, for example provided for being mounted beside a switch either similar or identical to the box-like switch 1 described above.

Obviously, to the electrical equipment described above, those skilled in the art, aiming at satisfying contingent and specific requirements, may carry out a number of modifications and variations, all being however contemplated within the scope of protection of the invention, such as defined in the annexed claims.

## Claims

1. An electrical equipment (1) to be installed in an electrical switchboard provided with a panel in which a substantially quadrangular window is defined, the electrical equipment (1) including a substantially box-like body (2) with a frontal portion (3) projecting from a face (4) of said body (2) and having a first dimension (H1) substantially similar to a side of the quadrangular window such that said frontal portion (3) can be received within said window,
**characterized in that**
the frontal portion (3) includes a fitting element (5) that can be removably associated with said face (4) of the box-like body (2) to reconfigure said frontal portion (3) by varying said first dimension (H1) thereof.

2. The electrical equipment (1) according to claim 1, wherein the fitting element (5) is substantially shaped as a rod having a length equal to a second dimension (W1) of said projecting frontal portion (3).

3. The electrical equipment (1) according to any preceding claim, wherein the projecting frontal portion (3) has a substantially quadrangular face and wherein the fitting element (5) can be removably associated with said box-like body (2) to change the dimension of a side of said quadrangular face.

4. The electric equipment (1) according to any preceding claim, wherein the fitting element (5) includes quick-coupling means (6) to be capable of being removably fixed to said face (4) of the box-like body (2).

5. The electric equipment (1) according to claim 4, wherein said box-like body (2) includes a coupling channel (7) and wherein said quick-coupling means (6) are such as to be capable of being received within said coupling channel (7).

6. The electric equipment (1) according to claim 5, wherein said coupling channel (7) is defined within the thickness of said projecting front portion (3).

7. The electrical equipment (1) according to claim 1, wherein said equipment (1) is a box-like switch.

## Patentansprüche

1. Elektrische Ausrüstung (1), welche in einer elektrischen Schaltanlage einzubauen ist, welche mit einer Blende bereitgestellt ist, in welcher ein im Wesentlichen rechteckiges Fenster definiert ist, wobei die elektrische Ausrüstung (1) einen im Wesentlichen kastenförmigen Körper (2) mit einem Vorderabschnitt (3) enthält, welcher von einer Fläche (4) des Körpers (2) aus vorragt und ein erstes Ausmaß (H1) hat, welches im Wesentlichen ähnlich einer Seite des rechteckigen Fensters ist, so dass der Vorderabschnitt (3) innerhalb des Fensters aufgenommen werden kann,
**dadurch gekennzeichnet, dass**
der Vorderabschnitt (3) ein Einsetzelement (5) enthält, welches entnehmbar mit der Fläche (4) des kastenförmigen Körpers (2) verbunden werden kann, um den Vorderabschnitt (3) durch ein Variieren seines ersten Ausmaßes (H1) neu zu konfigurieren.

2. Elektrische Ausrüstung (1) nach Anspruch 1, bei welcher das Einsetzelement (5) im Wesentlichen gleich einem Stab geformt ist, welcher eine Länge hat, welche gleich einem zweiten Ausmaß (W1) des vorragenden Vorderabschnitts (3) ist.

3. Elektrische Ausrüstung (1) nach einem der vorhergehenden Ansprüche, bei welcher der vorragende Vorderabschnitt (3) eine im Wesentlichen rechteckige Fläche hat, und wobei das Einsetzelement (5) entnehmbar mit dem kastenförmigen Körper (2) verbunden werden kann, um das Ausmaß einer Seite der rechteckigen Fläche zu ändern.

4. Elektrische Ausrüstung (1) nach einem der vorhergehenden Ansprüche, bei welcher das Einsetzelement (5) Schnellkopplungselemente (6) enthält, welche ausgelegt sind, entnehmbar an der Fläche (4) des kastenförmigen Körpers (2) eingesetzt zu werden.

5. Elektrische Ausrüstung (1) nach Anspruch 4, bei welcher der kastenförmige Körper (2) einen Kopplungskanal (7) enthält, und wobei die Schnellkopplungselemente (6) ausgelegt sind, innerhalb des Kopplungskanals (7) aufgenommen zu werden.

6. Elektrische Ausrüstung (1) nach Anspruch 5, bei welcher der Kopplungskanal (7) innerhalb der Dicke des vorragenden Vorderabschnitts (3) definiert ist.

7. Elektrische Ausrüstung (1) nach Anspruch 1, wobei die Ausrüstung (1) ein kastenförmiger Schalter ist.

## Revendications

1. Equipement électrique (1) à installer dans un tableau électrique pourvu d'un panneau dans lequel est définie une fenêtre essentiellement quadrangulaire, l'équipement électrique (1) comportant un corps (2) essentiellement en forme de boîte avec une partie frontale (3) faisant saillie d'une face (4) dudit corps (2) et ayant une première dimension (H1) essentiellement similaire à un côté de la fenêtre quadrangulaire de sorte que ladite partie frontale (3) puisse être reçue dans ladite fenêtre,
**caractérisé en ce que**
la partie frontale (3) comporte un élément d'ajustement (5) qui peut être associé de manière amovible à ladite face (4) du corps (2) en forme de boîte pour reconfigurer ladite partie frontale (3) en faisant varier ladite première dimension (H1) de celle-ci.

2. Equipement électrique (1) selon la revendication 1, dans lequel l'élément d'ajustement (5) est essentiellement en forme de tige ayant une longueur égale à une deuxième dimension (W1) de ladite partie frontale en saillie (3).

3. Equipement électrique (1) selon l'une des revendications précédentes, dans lequel la partie frontale en saillie (3) a une face essentiellement quadrangulaire et où l'élément d'ajustement (5) peut être associé de manière amovible audit corps (2) en forme de boîte afin de changer la dimension d'un côté de ladite face quadrangulaire.

4. Equipement électrique (1) selon l'une des revendications précédentes, dans lequel l'élément d'ajustement (5) comporte des moyens (6) d'accouplement rapide afin de pouvoir être fixé de manière amovible à ladite face (4) du corps (2) en forme de boîte.

5. Equipement électrique (1) selon la revendication 4, dans lequel ledit corps (2) en forme de boîte comporte un canal d'accouplement (7) et dans lequel lesdits moyens (6) d'accouplement rapide sont de nature à pouvoir être reçus dans ledit canal d'accouplement (7).

6. Equipement électrique (1) selon la revendication 5, dans lequel ledit canal d'accouplement (7) est défini dans l'épaisseur de ladite partie avant en saillie (3).

7. Equipement électrique (1) selon la revendication 1, dans lequel ledit équipement (1) est un commutateur en forme de boîte.
